# EUROPÄISCHE PATENTSCHRIFT

(11) **EP 2 063 312 B1**
(45) Veröffentlichungstag und Bekanntmachung des Hinweises auf die Patenterteilung: **21.05.2014**
(21) Anmeldenummer: 08169544.7
(22) Anmeldetag: 20.11.2008
(51) Int. Cl.: G02F 1/1333, G02F 1/1335, H04N 5/64

(54) **Anzeigeeinheit**
Display unit
Unité d'affichage

(30) Priorität: 22.11.2007 DE 202007000047 U
(43) Veröffentlichungstag der Anmeldung: 27.05.2009
(73) Patentinhaber: Hannemann, Achim, 63762 Grossostheim (DE)
(72) Erfinder: Hannemann, Achim, 63762 Grossostheim (DE)
(74) Vertreter: Stoffregen, Hans-Herbert

(56) Entgegenhaltungen:
- EP-A- 0 481 327
- EP-A- 1 253 459
- EP-A- 1 677 139
- WO-A-99/34250
- DE-A1-102004 040 508
- DE-A1-102005 042 730
- JP-A- 58 211 742
- US-A- 5 027 111
- US-A1- 2007 081 344

## Beschreibung

Die Erfindung bezieht sich auf eine Anzeigeeinheit nach dem Oberbegriff des Anspruchs 1.

Eine Anzeigeinheit der Eingangs genannten Art ist in der EP 1 253 459 A2 beschrieben. Für den Einsatz in einem Bank- oder Tankautomaten wird ein LCD-Modul mit Hintergrundbeleuchtung in ein Gehäuse integriert, wobei zwischen den Gehäusewandungen und dem LCD-Modul ein Luftspalt als Strömungskanal zur Abführung von Wärme vorgesehen ist.

Das LCD-Modul ist als transmissives LCD-Modul ausgebildet, welches bei intensiver Sonneneinstrahlung nur schwierig ablesbar ist.

In der EP 0 481 327 A1 ist eine Zapfsäulen-Anzeigevorrichtung beschrieben, bei der die Zähler-Anzeigen aus drei mehrstelligen transflektiven Flüssigkristall-Anzeigen (LCD) mit dahinter angeordneten Lichtquellen bestehen.

In der WO 99/34250 A1 ist ein Verfahren und eine Vorrichtung zur Reduzierung der Inftarotbelastung auf einem Anzeigegerät beschrieben. Hierzu wird zwischen der Strahlungsquelle und dem absorptiven Material eines Displays ein reflektives Material angeordnet, um bestimmte Wellenlängen von Strahlungsenergie im Infrarot- oder nahen Infrarotbereich zu reflektieren. Der Zusammenhang mit einem transreflektiven LCD ist nicht erwähnt.

Eine weitere Anzeigevorrichtung und ein Verfahren zu deren Herstellung ist in DE 10 2004 040 508 A1 beschrieben. Dabei ist eine Anzeigeeinheit mit einer transparenten Frontplatte geschützt, die aus einer laminierten Glasstruktur ausgeführt ist, bei der eine Folie zwischen zwei Glasschichten angeordnet ist.

In der DE 29700485 U1 ist ein Flachbildschirm mit einer LCD-Matrix beschrieben, die jeweils unter Einhaltung eines Luftspalts zwischen einer Glasplatte und einer flachen Beleuchtungseinrichtung angeordnet ist. Dabei beträgt die Dicke der Glasplatte ein Mehrfaches der Luftspaltbreite und die Beleuchtungseinrichtung weist eine der LCD-Matrix unmittelbar gegenüberliegende Lichtabgabefläche auf, die für eine homogene Lichtabgabe ausgebildet ist. Durch die der LCD-Matrix vorgeordnete Glasplatte wird der Blickwinkel, innerhalb dessen eine Betrachtung der Bildschirmanzeige möglich ist, vergrößert. Zugleich bildet die Glasplatte einen mechanischem Schutz für die LCD-Matrix. Zwischen der Glasplatte und der LCD-Matrix ist ein Luftspalt ausgebildet, wodurch das Auftreten störender Newton-Ringe verhindert wird. Zur Entspiegelung ist die Glasplatte vorzugsweise beidseitig mit Metall beschichtet.

Bei der oben beschriebenen LCD-Matrix handelt es sich um ein transmissives LCD-Panel. Diese sind als großformatige Flachbildschirme erhältlich. Diese Art der Flachbildschirme haben allerdings den Nachteil, dass sie zur Darstellung der Informationen eine eigene Lichtquelle, deren Lichtstärke begrenzt ist, benötigen. Bei direkter Sonneneinstrahlung auf den Flachbildschirm oder hohem Umgebungslicht sind die dargestellten Informationen nur schwer oder gar nicht lesbar.

Ein weiterhin nicht eingehend beachtetes Detail von Anzeigeeinheiten, welche insbesondere im Außenbereich eingesetzt werden, ist eine zuverlässige Kühlung oder Heizung des Flachbildschirms. Flachbildschirme reagieren insbesondere bei unzulässig hohen Umgebungs- oder Betriebstemperaturen mit unerwünschten Effekten wie Teiloder Gesamtschwärzung der Darstellungsfläche bis hin zur vollständigen Zerstörung. Die Zerstörung des Panels (Rekristallisierung der Flüssigkristalle) tritt schon bei Temperaturen unter 0° C auf.

Die bisher bekannten Ausführungsformen von Anzeigeeinheiten schränken daher den Einsatzbereich stark ein.

In der DE-A-36 17 784 ist eine projizierbare passive Flüssigkeitskristallmatrix-Anzeige in Mehrschichtarchitektur mit Wechselrahmen und absetzbaren Filtern beschrieben. Durch das beschriebene Bildwiedergabegerät ist es möglich, großformative LCD-Anzeigen in Verbindung mit Projektionsgeräten nutzen zu können, wobei insbesondere im Lehr- und Demonstrationsbetrieb die unterschiedlichsten Darstellungsanwendungen realisiert werden können. Der Benutzer hat so die Möglichkeit, selbstständig und ohne Mehrkosten das Gerät für seine spezielle Anwendung zu gestalten.

In der WO-95/09389 ist ein Flachdisplay beschrieben, das zwischen direkter und Projektionsanzeigeanwendung umschaltbar ist und in einem informationsverarbeitenden Gerät aufgenommen ist. In einer bevorzugten Ausführungsform ist das informationsverarbeitende Gerät als Laptop ausgebildet. Das Gerät umfasst einen Basisabschnitt mit Computerschaltkreisen, Dateneingabemitteln und ist beweglich mit einem Displayabschnitt verbunden, welcher das Flachdisplay aufweist. Ferner ist ein Hintergrundelement vorgesehen, das auf einer gegenüberliegenden hinteren Seite des Flachdisplays angeordnet werden kann.

Ausgehend von diesem Stand der Technik liegt der vorliegenden Erfindung die Aufgabe zugrunde, eine Anzeigeeinheit der eingangs beschriebenen Art dahingehend weiterzubilden, dass die Erkennbarkeit der visuellen Information insbesondere bei hellem Umgebungslicht oder direktem Lichteinfall sowohl im Innen- als auch im Außenbereich über einen großen Temperaturbereich verbessert wird.

Die Aufgabe wird erfindungsgemäß durch die Merkmale des Anspruchs 1 gelöst.

Zur Kühlung des Flachbildschirms ist einerseits ein Infrarotfilter vorgesehen, welcher einfallende Wärmestrahlung absorbiert und/oder reflektiert und andererseits wird ein Luftspalt zwischen der Flüssigkristallanzeige und Schutzglas zur Bildung eines Strömungskanals vorgeschlagen, über den auf der Oberfläche der Flüssigkristallanzeige entstehende Wärme und durch äußere Einstrahlung entstehende Wärme abtransportiert werden kann. Gleichzeitig besteht durch den Strömungskanal auch die Möglichkeit, bei niedrigen Außentemperaturen Wärme zum Schutz der Flüssigkristallanzeige zuzuführen.

Der Infrarotfilter wird vorzugsweise auf der Rückseite des Schutzglases aufgedampft. Somit wird die Erwärmung der Anzeigeeinheit insbesondere des Flachbildschirms durch äußerliche Einstrahlung wie z.B. das Sonnenlicht gemindert.

Durch die erfindungsgemäße Ausführungsform wird die Erkennbarkeit der darzustellenden visuellen Informationen bei hellem Umgebungslicht und in einem großen Temperaturbereich verbessert. Ein transreflektiver Flachbildschirm besitzt gegenüber den bisher eingesetzten transmissiven Flachbildschirmen den Vorteil, dass dieser zur Darstellung der Information nicht zwingenderweise auf eine interne Beleuchtungseinrichtung angewiesen ist, da die Flüssigkristallanzeige zur Darstellung der Informationen das einfallende Umgebungslicht nutzt. Mittels eines Reflektors wird dieses als Hintergrundbeleuchtung für die Flüssigkristalle benutzt. Daher ist der Flachbildschirm unter praktisch allen Lichtverhältnissen lesbar. Bislang waren transreflektive Flachbildschirme nur in Größen bis etwa 19" herstellbar und somit z.B. dem Einsatz in mobilen Kleingeräten oder automotiven Anzeigen vorbehalten. Durch neue Herstellungstechnologien werden nun Größen ab 32" erschlossen.

Durch die Merkmale kann nicht nur die Sichtbarkeit verbessert werden, sondern zudem auch der Energieverbrauch reduziert und der Wirkungsgrad der Flüssigkristallanzeige verbessert werden. Ergänzend ist anzumerken, dass die Lebensdauer der Flüssigkristallanzeige verlängert wird.

Das entspiegelte Schutzglas kann vorzugsweise aus Conturan ® -Glas ausgebildet sein.

In bevorzugter Ausführungsform ist das Schutzglas als Sicherheitsglas ausgebildet. Sicherheitsglas besteht aus mindestens drei Schichten, so z.B. aus zwei Glasschichten mit einer dazwischen liegenden Folie, wobei die Schichten dauerhaft zu einer Einheit verbunden sind. In diesem Fall kann der Infrarotfilter auf einer beliebigen Fläche des zur Innenseite gerichteten Bestandteils des Sicherheitsglases aufgebracht wie aufgedampft werden. Die Anordnung, Anzahl und Ausführung der Schichten kann ohne den erfindungsgemäßen Gedanken zu verändern, variiert werden. Sofern nicht wie üblicherweise auf dem Flachbildschirm ein UV-Filter zu dessen Schutz angebracht ist, kann dieser Filter ergänzend zu dem Infrarotfilter auf einer beliebigen Fläche des Schutzglases oder des Sicherheitsglases aufgebracht werden.

Erfindungsgemäß weist die Anzeigeeinheit Klimatisierungsmittel auf, welche den Strömungskanal mit einem Kühl- oder Wärmemedium versorgen.

In einer bevorzugten Ausführungsform, insbesondere für den Innenbereich, sind die Klimatisierungsmittel als Lüfter wie Radial- oder Axiallüfter ausgebildet, die im Bereich einer randseitigen Öffnung des Strömungskanals angeordnet sind.

Die Klimatisierungsmittel sind vorzugsweise als ein oder mehrere Lüfter wie Radial- oder Axiallüfter zur Erzeugung eines Medienstroms in dem Strömungskanal ausgebildet. Die Lüfter können im Bereich randseitiger Öffnungen des Strömungskanals angeordnet sein, wobei durch erste Lüfter Umgebungsluft durch Belüftungsschlitze eingeleitet und über zweite Lüfter aus dem Strömungskanal abgesaugt und über Belüftungsschlitze an die Umgebung abgeleitet werden. Diese Ausführungsform entspricht einer einfachen Ausführung zur Klimatisierung für Einsatzbereiche, in denen keine Temperaturen unterhalb der für den Flachbildschirm der Anzeigeeinheit spezifizierten Arbeitsoder Umgebungstemperaturen zu erwarten sind. Das wäre z.B. beim Einsatz der Anzeigeeinheit im Innenbereich wie Schaufenster der Fall.

Durch den Luftspalt zwischen der Flüssigkristallanzeige und Schutzglas wird ein Strömungskanal gebildet, der eine Luftströmung entlang der Oberfläche der Flüssigkristallanzeige derart ermöglicht, dass eine über die Flachbildschirmfläche möglichst gleichmäßige Temperaturverteilung erreicht wird. Insbesondere im oberen Bereich der Anzeigeeinheit kann im Falle der Erwärmung die innenliegende Lufttemperatur auf für den Flachbildschirm unzulässig hohe Betriebstemperaturen steigen. Das wird dadurch gelöst, dass zwischen dem Schutzglas und dem Flachbildschirm physikalisch der Strömungskanal bzw. Strömungskanäle geschaffen werden, in welchem bzw. in welchen über ein geeignetes Medium die durch den Betrieb des Flachbildschirms sowie durch äußere Einstrahlungen entstehende Wärme abgeführt werden kann.

Im Falle von zu niedrigen Umgebungs- oder Arbeitstemperaturen für den Flachbildschirm der Anzeigeeinheit kann im Strömungskanal auch ein Medium zur Erwärmung des Flachbildschirms der Anzeigeeinheit zugeführt werden. Das Medium zum Abtransport der entstehenden oder Zuführen von Wärme ist vorzugsweise Luft, kann aber auch jedes andere geeignete Medium sein und richtet sich nach der jeweiligen Anwendung bzw. Umgebungsbedingungen der Anzeigeeinheit. Ohne den Sinn der Erfindung zu berühren, wird in der folgenden Beschreibung zum besseren Verständnis weiterhin von Luft als Medium für den Wärmetransport gesprochen.

Überwacht wird die innenliegende Temperatur von mindestens einem Temperatursensor, der vorteilhaft im oberen Bereich der Anzeigeeinheit angebracht ist. Die Anzahl der Temperatursensoren sowie deren physikalische Lage innerhalb der Anzeigeeinheit kann variieren, ohne den Sinn der Erfindung zu verändern. Diese können auch zur Regelung der Kühlung bzw. Heizung eingesetzt werden.

Sind Umgebungstemperaturen zu erwarten, in denen der Luftstrom im Strömungskanal die einwandfreie Kühlung oder Heizung nicht gewährleistet, so kann das Klimatisierungsmittel als Klimaanlage ausgebildet sein. Diese ist mit dem Strömungskanal zur Bildung eines Kühl-/Wärmekreislaufs gekoppelt. Der Kühl-/Wärmekreislauf schließt vorzugsweise den Strömungskanal und vorzugsweise einen sich zwischen Rückseite der Flüssigkristallanzeige und Gehäuserückwand erstreckenden Raum mit ein.

Die anzuzeigenden Informationen für das Display werden von einer internen oder externen am Display angebrachten oder abgesetzten Speichereinheit bereitgestellt. Die Speichereinheit kann z.B. ein PC, eine Multimedia-Einheit oder auch eine Ansteuerelektronik zur Wandlung von externen analogen oder digitalen Videosignalen sein. Die Speichereinheit erhält ihre wiederzugebende Informationen und Steuerbefehle über drahtgebundene oder drahtlose Programmierung, z.B. WLAN, GPRS, ULRS usw. Bei ortsveränderlichen Anzeigeeinheiten kann die anzugebende Information der Speichereinheit von einem ortsbestimmenden Gerät wie GPS und/oder GSM/UMTS-Sendestationen abhängig gemacht werden. Optional kann auch so der Betrachter interaktiv per Touch, Handy oder anderen zukünftigen Kommunikationstechnologien mit der Flüssigkristallanzeige kommunizieren.

Je nach baulicher Ausführung der Anzeigeeinheit kann für die Speichereinheit der Klimakreislauf des Flachbildschirms zur Klimatisierung oder ein eigener Klimakreislauf vorgesehen sein, ohne den Sinn der Erfindung zu verändern.

Die Flüssigkristallanzeige kann vorzugsweise eine TFT-Matrix aufweisen und als Aktiv-Matrix-Display ausgebildet sein.

Es wird daraufhin hingewiesen, dass oben genannte Ausführungsbeispiele nicht als Begrenzung des Erfindungsgedankens anzusehen sind, sondern dass Veränderungen leicht durchführbar sind, ohne den Grundgedanken und Rahmen der Erfindung zu verlassen.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:
- Fig. 1: einen schematischen Aufbau einer Anzeigeeinheit,
- Fig. 2: einen schematischen Aufbau eines Schutzglases,
- Fig. 3a) - g): perspektivische Darstellungen eines Gehäuses einer ersten Ausführungsform der Anzeigeeinheit,
- Fig. 4a) - f): perspektivische Ansichten einer Rückwand des Gehäuses der Anzeigeeinheit nach Fig. 3,
- Fig. 5: eine perspektivische Darstellung einer zweiten Ausführungsform einer Anzeigeeinheit und
- Fig. 6: eine perspektivische Darstellung einer dritten Ausführungsform einer Anzeigeeinheit.

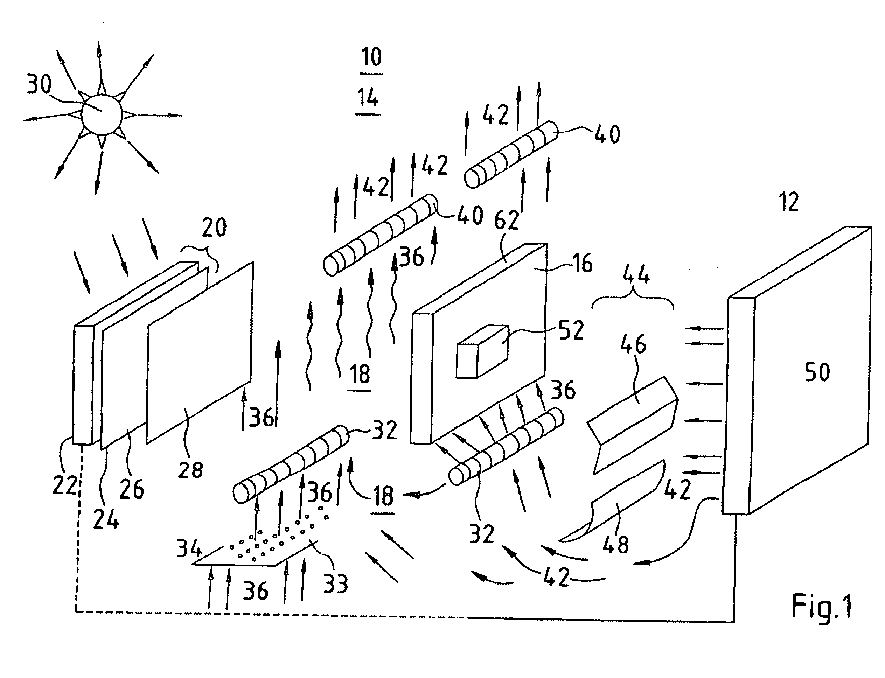

Fig. 1 zeigt in rein schematischer Darstellung eine erste Ausführungsform einer Anzeigeeinheit 10, bestehend aus einem in einem Rahmen bzw. Gehäuse 12 angeordneten Flachbildschirm 14. Der Flachbildschirm 14 umfasst eine transreflektive Flüssigkristallanzeige 16, sowie ein unter Einhaltung eines Luftspalts 18 vor der Flüssigkristallanzeige 16 angeordnetes entspiegeltes Schutzglas 20. Das Schutzglas 20 liegt in einer Ebene, die parallel zu der Oberfläche der Flüssigkristallanzeige 16 verläuft. Der zwischen Schutzglas 20 und Flüssigkristallanzeige 16 gebildete Luftspalt 18 ist als Strömungskanal 18 zur Einleitung eines Kühl- oder Wärmemediums ausgebildet.

Im dargestellten Ausführungsbeispiel ist das Schutzglas 20 als Sicherheitsglas ausgebildet, mit mindestens drei Schichten, wobei eine erste äußere Schicht 22 als entspiegelte Glasschicht vorzugsweise aus Conturan ®-Glas besteht, eine zweite mittlere Schicht als Folie 24 mit aufgedampften Infrarotfilter 26 oder nur aufgedampfte IR/UV-Filter sowie eine dritte innere Schicht als Glasscheibe 28 beispielsweise aus ESG-Sicherheitsglas.

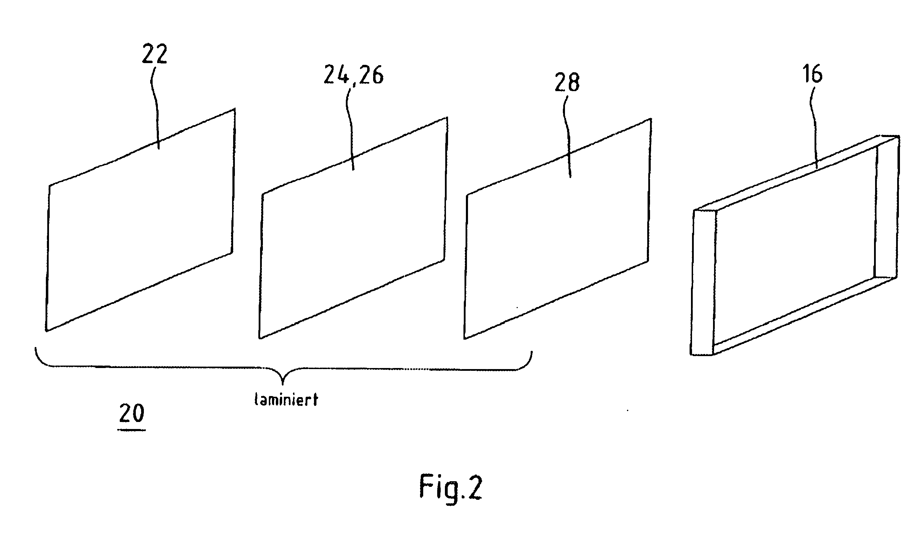

Eine detaillierte Darstellung des Schutzglases 20 ist in Fig. 2 dargestellt. Die einzelnen Schichten bestehend aus entspiegeltem Conturan ®-Glas, Folie mit aufgedampften IR-Schutz sowie ESG-Sicherheitsglas 28 können miteinander verbunden wie laminiert werden. Zur Abführung von Wärme, die zwischen Schutzglas 20 und Oberfläche 62 der Flüssigkristallanzeige 16 entsteht, sind Klimatisierungsmittel 32 in Form von Lüftern 32 vorgesehen, die im Bereich eines unteren Lüftungsschlitzes 34 des Strömungskanals 18 angeordnet sind. Durch diese wird eine Luftströmung 36 in den Strömungskanal 18 eingeleitet, die über im Bereich eines oberen Lüftungsschlitzes 38 angeordnete Lüfter 40 als Abluft 42 abtransportiert wird.

In einem Bereich 44 zwischen einer Rückseite der Flüssigkristallanzeige und einer Rückwand des Rahmens 12 können Leitbleche 46, 48 angeordnet sein, die die Luftströmung 42 leiten. Zur Beheizung/Kühlung der Luftströmung kann eine Klimaanlage 50 in der Rückwandung des Rahmens 12 integriert sein.

Die Luftströmung 42 wird so gewählt, dass eine über die Flachbildschirmfläche 62 möglichst gleichmäßige Temperaturverteilung erreicht wird. Insbesondere im oberen Bereich der Anzeigeeinheit 10 kann im Falle der Erwärmung die innenliegende Lufttemperatur auf für den Flachbildschirm unzulässig hohe Betriebstemperaturen steigen. Das wird dadurch gelöst, dass zwischen dem Schutzglas 20 und der Flüssigkristallanzeige 16 physisch der Strömungskanal 18 geschaffen ist, in welchem über ein geeignetes Medium wie Luft die durch den Betrieb der Flüssigkristallanzeige 16 sowie durch äußere Einstrahlung 30 entstehende Wärme abgeführt wird.

Im Falle von zu niedrigen Umgebungs- und/oder Arbeitstemperaturen für die Flüssigkristallanzeige 16 kann der Strömungskanal 18 auch ein Medium zur Erwärmung des Flachbildschirms transportieren. Das Medium zum Transport der entstehenden oder zuführenden Wärme ist vorzugsweise Luft, kann aber auch jedes andere geeignete Medium sein und richtet sich nach der jeweiligen Anwendung bzw. Umgebungsbedingung der Anzeigeeinheit. Die in Fig. 1 beispielhaft dargestellte Ausführungsform der Klimatisierung ist für Einsatzbereiche, in denen keine Temperaturen unterhalb der für den Flachbildschirm der Anzeigeeinheit spezifizierten Arbeits- oder Umgebungstemperaturen zu erwarten sind. Das wäre z.B. bei Einsatz der Anzeigeeinheit im Innenbereich wie beispielsweise Schaufenster der Fall. Der Luftstrom 36 zur Kühlung oder Heizung der Flüssigkristallanzeige 16 wird durch einen oder mehrere Radial- oder Axiallüftertypen 32, 40 erzeugt und kann dem Strömungskanal über Filter 33 zugeführt werden.

Die anzuzeigenden Informationen für die Flüssigkristallanzeige 16 werden von einer internen oder externen, am Display angebrachten abgesetzten Speichereinheit 52 bereitgestellt. Die Speichereinheit kann z.B. aus einem PC oder sonstiger Multimedia-Einheit oder auch einer Ansteuerelektronik zur Wandlung von externen analogen oder digitalen Videosignalen bestehen. Die Speichereinheit 52 erhält ihre anzuzeigenden Informationen und Steuerbefehle über drahtgebundene oder drahtlose Programmierung wie beispielsweise WLAN, GPRS, UMTS. Bei ortsveränderlichen Anzeigeeinheiten kann die anzugebende Information der Speichereinheit von einem ortsbestimmenden Gerät wie GPS und/oder GSM/UMTS-Sendestationen abhängig gemacht werden.

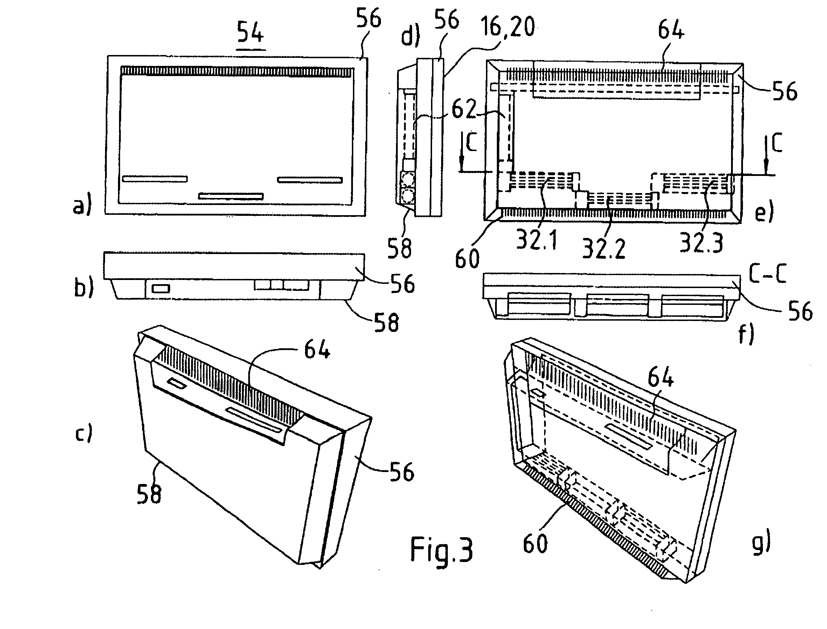

Fig. 3 zeigt eine mögliche Ausführungsform eines Gehäuses 54 für die Anzeigeeinheit, bestehend aus einem Rahmen 56 und einem Rückelement 58. Der Rahmen 56 umschließt randseitig die Flüssigkristallanzeige 16 mit dem dazu beabstandet angeordneten Sicherheitsglas 20. In dem dargestellten Ausführungsbeispiel sind Lüftereinrichtungen wie Radiallüfter 32.1, 32.2 sowie 32.3 in einem Bereich hinter der Flüssigkristallanzeige 16 angeordnet, vorzugsweise im Bereich von in einem unteren Rand 58 der Rückwand eingebrachten Lüftungsschlitze 60. Alternativ kann auch eine Lüftereinheit wie Radiallüfter parallel zu einem Seitenrand des Rahmens 56 angeordnet sein. Durch die Radiallüfter 32.1, 32.2, 32.3 wird Luft beispielsweise durch die Lüftungsschlitze 60 angesaugt und über im oberen Bereich des Rahmens angeordnete Lüftungsschlitze 64 abgeführt. Die Filter 33 können zwischen Lüftungsschächten 60 und Strömungskanal angeordnet sein.

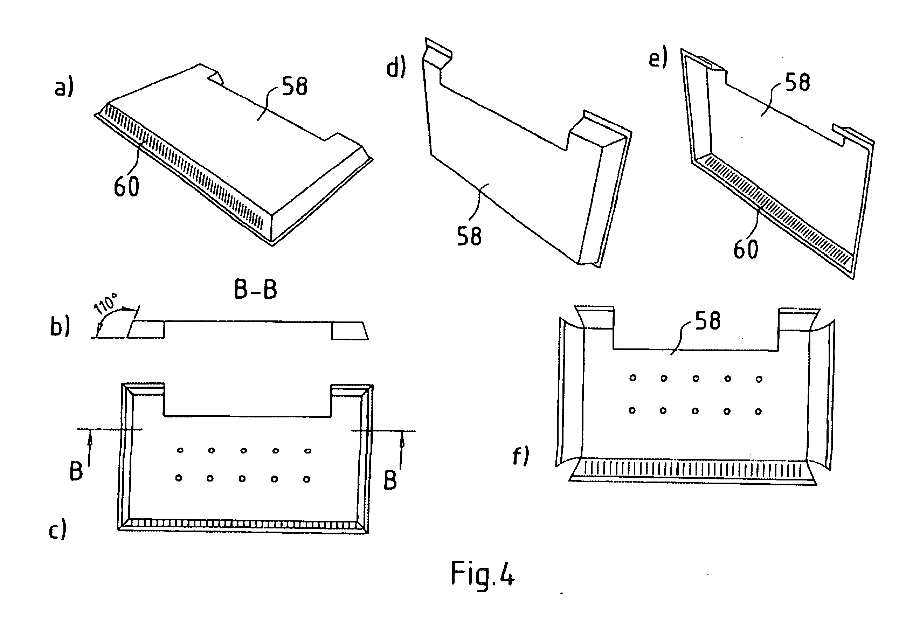

In Fig. 4 a) - f) ist das Rückwandelement 58 in verschiedenen Ansichten dargestellt.

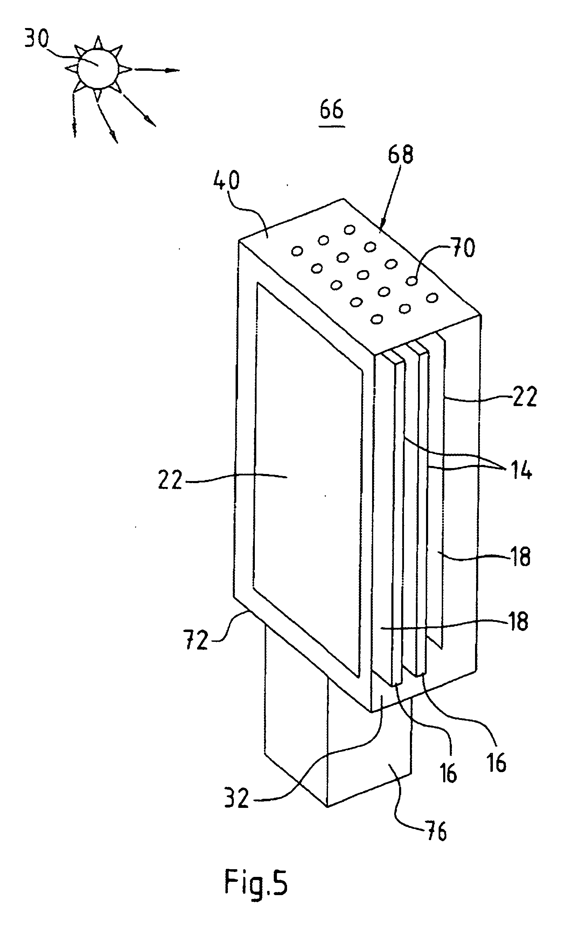

Fig. 5 zeigt in perspektivischer Darstellung eine weitere Ausführungsform einer Anzeigeeinheit 66, die vorzugsweise für den Außenbereich, z.B. Werbung in Fußgängerzonen, aber auch im Innenbereich, wie z.B. Schaufensterwerbung oder Foyer-Eingangsbereich, einsetzbar ist, bei der je nach Lage des Schaufensters ebenfalls wie im Außenbereich mit direkter Sonneneinstrahlung oder zumindest starkem Umgebungslicht zu rechnen ist. Die Anzeigeeinheit kann wahlweise mit einem Display vorderseitig oder vorder- und rückseitig mit je einem Display ausgestattet werden. Weitere Displays können über- und nebeneinander angeordnet sein. Von außen sichtbar ist das Schutzglas 22, hinter dem mit Abstand die zumindest eine Flüssigkristallanzeige 16 sowie die Lüftereinheiten 32, 40 bzw. weitere Klimatisierungsmittel angeordnet sind. An einer Oberseite 68 der Anzeigeeinrichtung sind Lüftungsdurchbrechungen 70 eingebracht. Ein Gehäuse 72 der Anzeigeeinheiten 66 ist säulenförmig ausgebildet, wobei der Flachbildschirm 14 in einer Vorderseite bzw. Vorder- und Rückseite 72 der Säule angeordnet ist. In einem Fuß 76 der Säule können Betriebselemente wie Spannungsversorgung, Steuereinheiten, PCs usw. angeordnet sein.

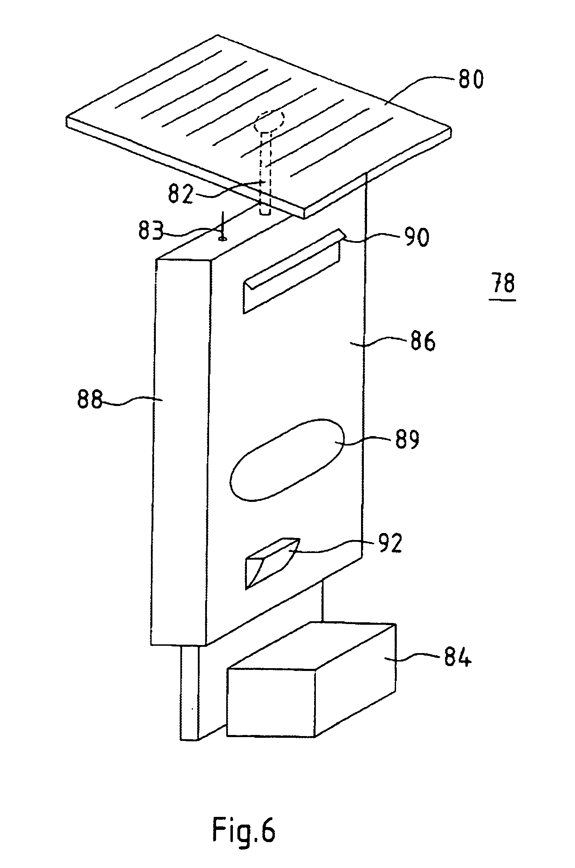

Schließlich ist in Fig. 6 eine weitere Ausführungsform einer Anzeigeeinheit 78 perspektivisch dargestellt, die für den Einsatz im Freien, d.h. unabhängig von einer Netzspannungsversorgung konzipiert ist. Die Energieversorgung erfolgt über eine Energiequelle, die vorzugsweise über regenerative Energien versorgt wird. Im beschriebenen Beispiel ist ein Solarpanel 80 vorgesehen, welches mit einem Antrieb 82 verbunden und der Sonne folgend ansteuerbar ist. Die von dem Solarpanel 80 erzeugte Energie wird in einem Akkumulator 84 gespeichert, der für die Energieversorgung der Anzeigeeinheit beispielsweise während der Nachtstunden zur Verfügung steht. In einem in etwa säulenförmigen Gehäuse 86 ist der Flachbildschirm 88 angeordnet, zusammen mit den für den Betrieb notwendigen Klimatisierungseinrichtungen wie Lüfter und/oder Klimaanlage. Eine Ansaugöffnung 89 der Klimaanlage ist auf einer Rückseite des Gehäuses 86 angeordnet. Weiterhin kann die Stelle in verschiedenen geometrischen Gebilden, wie z.B. Würfel, Pyramide, Zylinder, ... ausgeführt werden, insbesondere bei Verwendung von TFT-Folien oder ähnliches. Im oberen Bereich des Gehäuses 86 ist ein Deckellochblech 90 als Luftaustritt vorgesehen. Im unteren Bereich des Gehäuses kann beispielsweise ein Kondensatbehälter 92 für die im Gehäuse integrierte Klimaanlage angeordnet sein. Ergänzend kann je nach Einsatzort auch eine Heizung (nicht dargestellt) in dem Gehäuse 86 integriert sein.

Zur Kommunikation der Anzeigeeinheit 78 mit einer Zentrale kann die Anzeigeeinheit 78 eine Sende-/Empfangseinheit 83 aufweisen, die mittels drahtloser Datenkommunikation mit einer Zentrale kommuniziert, um Daten auf dem Flachbildschirm 88 anzuzeigen.

Zusammenfassend wird durch die Erfindung eine tageslichttaugliche Flüssigkristallanzeige bereitgestellt, die in der Lage ist, in direktem Sonnenlicht kontrastreiche Bilder (statisch oder dynamisch, in Farbe oder schwarzweiß) zu zeigen. Das Display ist in Umgebungen mit hohen Temperaturschwankungen im Bereich von - 40° bis + 60° einsatzbereit und kann in allen Schutzarten ausgeführt werden. Anwendungsbereiche sind z.B. in hellen Foyers oder im Schaufensterbereich oder in einer Stele integriert im Außenbereich.

Basis des Flachbildschirms ist eine transreflektive Flüssigkristallanzeige. Hierbei wird das Sonnenlicht zusätzlich zum Backlight benutzt, d.h., das Sonnenlicht wird von der Betrachterseite durch die Flüssigkristallanzeige gelassen und über einen rückseitigen Spiegel wieder reflektiert und als zusätzliche Lichtquelle zum Durchleuchten der Flüssig-Kristalle genutzt. Das Backlight wird entsprechend dem Bildinhalt und dem einfallenden Sonnenlicht hell oder dunkel moduliert. Um die Schaltzeiten der Transistoren der TFT-Matrix der Flüssigkristallanzeige zu beschleunigen, können z.B. Overdrive-Algorithmen eingesetzt werden.

Um jedoch die Flüssigkristallanzeige dem direkten Sonnenlicht länger auszusetzen, müssen geeignete Filtermaßnahmen ergriffen werden. Das Sonnenlicht, speziell die IRund UV-Strahlung lassen das Display schwarz werden und zerstören es. Durch das erfindungsgemäß integrierte IR- und/oder UV-Filter werden solche Zerstörungen vermieden. Ebenso wird das Display gegen Überhitzung geschützt. Dadurch kann der Flachbildschirm im Dauereinsatz dem direkten Sonnenlicht ausgesetzt werden, wobei eine Sonnenlichtstärke im Bereich von 150000 LUX liegen kann. Um hierbei noch ein erkennbares Bild zu erhalten, sollte der Flachbildschirm eine Mindestleuchtdichte von ca. 1400 cd/m² erreichen.

Der Erfindung liegt der Gedanke zugrunde, die Tageslichtsichtbarkeit der Flüssigkristallanzeige durch eine Kombination aus entspiegeltem IR- und/oder UV-Filter-Sicherheits-Frontglas mit entsprechender Wärmeableitung und Kühlung der Flüssigkristallanzeige zu kombinieren. Hierzu wird ein Lüftungskreislauf zur Wärmeabfuhr vor dem transreflektiven Panel unter Kühlung der Elektronik vorgeschlagen.

Das Glas ist entspiegelt und mit einer Absorptionsschicht und/oder Reflexionsschicht der schädlichen Strahlung versehen. Die dadurch entstehende Wärme wird durch geeignete Kühlungs- und/oder Lüftertechnik abgeleitet. Hierzu sind Walzen- oder Radiallüfter an der Unterseite zwischen Sicherheitsglas und Flüssigkristallanzeige wie auch an der Oberseite zur Zirkulation und Wärmeabsaugung platziert. Auf der Rückseite der Flüssigkristallanzeige werden geeignete Kühlungsmaßnahmen für die Elektronik platziert. Das Schutzglas ist mit einem IR/UV-Filter bedampft, der maximal 2 % der Wellenlängen von 1 - 400 nm durchlässt, d.h., 98 % der UV-Strahlung wird geblockt.

## Patentansprüche

1. Anzeigeeinheit (10, 66, 78), umfassend ein Gehäuse, einen in dem Gehäuse (12, 72, 86) angeordneten Flachbildschirm (14) mit einer Flüssigkristallanzeige (16) sowie ein unter Einhaltung eines Luftspaltes (18) vor der Flüssigkristallanzeige (16) angeordnetes Schutzglas (20), wobei der Luftspalt (18) zwischen der Flüssigkristallanzeige (16) und dem Schutzglas (20) als Strömungskanal (18) ausgebildet ist und wobei die Anzeigeeinheit ein Klimatisierungsmittel (32, 40) aufweist, das dafür ausgebildet ist, ein Kühl- oder Wärmemedium (36) in den Strömungskanal einzuleiten zum Abtransport von durch die Flüssigkristallanzeige und/oder äußere Einstrahlung entstehender Wärme oder zur zuführung von Wärme bei niedriger Außentemperatur,
**dadurch gekennzeichnet,**
**dass** die Flüssigkristallanzeige als transreflektive Flüssigkristallanzeige (16) ausgebildet ist und dass das Schutzglas ein Infrarotfilter (26) zur Absorption und/oder Reflexion von einfallender Wärmestrahlung aufweist.

2. Anzeigeeinheit nach Anspruch 1,
**dadurch gekennzeichnet, dass** das Infrarotfilter (26) auf einer Rückseite des Schutzglases (20) aufgedampft ist.

3. Anzeigeeinheit nach Anspruch 1,
**dadurch gekennzeichnet,**
**dass** das Schutzglas (20) als Sicherheitsglas ausgebildet ist, bestehend aus mindestens drei Schichten (22, 24, 28), einer äußeren und einer inneren Glasschicht (22, 28), mit einer dazwischen angeordneten Folie (24), wobei das Infrarotfilter (26) auf einer beliebigen Fläche eines ins Innere des Schutzglases gerichteten Bestandteils des Sicherheitsglases aufgedampft ist und dass die Schichten zu einer Einheit laminiert sind.

4. Anzeigeeinheit nach zumindest einem der vorhergehenden Ansprüche,
**dadurch gekennzeichnet,**
**dass** das Schutzglas (20) zusätzlich einen UV-Filter aufweist.

5. Anzeigeeinheit nach Anspruch 4,
**dadurch gekennzeichnet,**
**dass** der UV-Filter ergänzend zu dem Infrarotfilter (26) auf einer beliebigen Fläche des Schutzglases oder des Sicherheitsglases aufgebracht ist.

6. Anzeigeeinheit nach zumindest einem der vorhergehenden Ansprüche,
**dadurch gekennzeichnet,**
**dass** das Kühl- oder Wärmemedium Luft (36) ist.

7. Anzeigeeinheit nach zumindest einem der vorhergehenden Ansprüche,
**dadurch gekennzeichnet,**
**dass** das Klimatisierungsmittel (32, 40) mit einem Temperatursensor verbunden ist, welcher die innenliegende Temperatur vorzugsweise im oberen Bereich der Anzeigeeinheit (16) erfasst und das Klimatisierungsmittel (32, 40) steuert.

8. Anzeigeeinheit nach zumindest einem der vorhergehenden Ansprüche,
**dadurch gekennzeichnet,**
**dass** das Klimatisierungsmittel als ein oder mehrere Lüfter (32, 40) wie Radial- oder Axiallüfter zur Erzeugung eines Luftstroms (36) in dem Strömungskanal (18) ausgebildet ist, wobei die Lüfter im Bereich randseitiger Öffnungen (34) des Strömungskanals angeordnet sind.

9. Anzeigeeinheit nach Anspruch 8,
**dadurch gekennzeichnet,**
**dass** zumindest ein Lüfter (62) als Radiallüfter an einem seitlichen Rand der Flüssigkristallanzeige angeordnet ist.

10. Anzeigeeinheit nach zumindest einem der vorhergehenden Ansprüche,
**dadurch gekennzeichnet,**
**dass** das Gehäuse der Anzeigeeinheit zumindest im unteren und oberen Randbereich Lüftungsschlitze (64, 60) aufweist.

11. Anzeigeeinheit nach zumindest einem der vorhergehenden Ansprüche,
**dadurch gekennzeichnet,**
**dass** das Klimatisierungsmittel eine Klimaanlage ist, welche mit dem Strömungskanal (18) zur Bildung eines Kühl-/Wärmekreislaufs gekoppelt ist.

12. Anzeigeeinheit nach Anspruch 11,
**dadurch gekennzeichnet,**
**dass** der Kühl-/Wärmekreislauf den Strömungskanal (18) und vorzugsweise einen sich zwischen Rückseite der Flüssigkristallanzeige und Gehäusewand erstreckenden Raum (44) umfasst.

13. Anzeigeeinheit nach zumindest einem der Ansprüche 11 und 12,
**dadurch gekennzeichnet,**
**dass** elektronische Einheiten (52) zum Steuern der Anzeigeeinheit in dem Kühl-/Wärmekreislauf, vorzugsweise auf einer Rückseite der Flüssigkristallanzeige (16) angeordnet sind.

14. Anzeigeeinheit nach zumindest einem der vorhergehenden Ansprüche, **dadurch gekennzeichnet,**
**dass** die Flüssigkristallanzeige (16) eine TFT-Matrix aufweist.

## Claims

1. Display unit (10, 66, 78), comprising a housing, a flat screen monitor (14) arranged inside the housing (12, 72, 86) with a liquid crystal display (16) and a protective glass (20) arranged in front of the liquid crystal display (16) and maintaining an air gap (18), where the air gap (18) is formed between the liquid crystal display (16) and the protective glass (20) as a flow channel (18) and where the display unit has an air-conditioning means (32, 40) designed to introduce a cooling or heating medium (36) into the flow channel for removing heat generated by the liquid crystal display and/or by external irradiation or for supplying heat at low outside temperature,
**wherein**
the liquid crystal display is in the form of a transreflective liquid crystal display (16) and the protective glass has an infrared filter (26) for absorption and/or reflection of incident heat radiation.

2. Display unit according to claim 1,
**wherein**
the infrared filter (26) is vapour-deposited on a rear side of the protective glass (20).

3. Display unit according to claim 1,
**wherein**
the protective glass (20) is in the form of safety glass consisting of at least three layers (22, 24, 28), an outer and an inner glass layer (22, 28) with a film (24) arranged between them, where the infrared filter (26) is vapour-deposited on any required surface of a constituent part of the safety glass facing the interior of the protective glass and the layers are laminated to form one unit.

4. Display unit according to at least one of the above claims,
**wherein**
the protective glass (20) additionally has a UV filter.

5. Display unit according to claim 4,
**wherein**
additionally to the infrared filter (26) the UV filter is applied to any required surface of the protective glass or safety glass.

6. Display unit according to at least one of the above claims,
**wherein**
the cooling or heating medium is air (36).

7. Display unit according to at least one of the above claims,
**wherein**
the air-conditioning means (32, 40) is connected to a temperature sensor which captures the internal temperature preferably in the upper region of the display unit (16) and controls the air-conditioning means (32, 40).

8. Display unit according to at least one of the above claims,
**wherein**
the air-conditioning means is in the form of one or more fans (32, 40) such as radial or axial fans for generating an air flow (36) in the flow channel (18), where the fans are arranged in the region of the rim-side openings (34) of the flow channel.

9. Display unit according to claim 8,
**wherein**
at least one fan (62) is arranged as a radial fan on a lateral rim of the liquid crystal display.

10. Display unit according to at least one of the preceding claims,
**wherein**
the housing of the display unit has ventilation slits (64, 60) at least in the lower and upper rim regions.

11. Display unit according to at least one of the above claims,
**wherein**
the air-conditioning means is an air-conditioning unit which is coupled to the flow channel (18) to form a cooling/heating circuit.

12. Display unit according to claim 11,
**wherein**
the cooling/heating circuit comprises the flow channel (18) and preferably a space (44) extending between the rear side of the liquid crystal display and the housing wall.

13. Display unit according to at least one of claims 11 and 12,
**wherein**
electronic units (52) for controlling the display unit are arranged in the cooling/heating circuit, preferably on a rear side of the liquid crystal display (16).

14. Display unit according to at least one of the above claims,
**wherein**
the liquid crystal display (16) has a TFT matrix.

## Revendications

1. Unité d'affichage (10, 66, 78) comprenant: un boîtier, un écran plat (14) utilisant un affichage à cristaux liquides (16) - ledit écran étant disposé dans le boîtier (12, 72, 86) - ainsi qu'un verre de protection (20) laissant un passage à une couche d'air (18) devant l'affichage à cristaux liquides (16), sachant que la couche d'air (18) est conçue sous forme d'un canal d'écoulement (18) entre l'affichage à cristaux liquides (16) et le verre de protection (20) et que l'unité d'affichage présente un moyen de climatisation (32, 40), lequel est conçu pour introduire un fluide réfrigérant ou calorifique (36) dans le canal d'écoulement permettant ou bien l'évacuation de la chaleur provoquée par l'affichage à cristaux liquides et/ou une irradiation extérieure, ou bien l'alimentation de chaleur en cas de température ambiante trop faible,
**caractérisée en ce**
**que** l'affichage à cristaux liquides est réalisé sous forme d'un affichage à cristaux liquides transréflectif (16) et que le verre de protection présente un filtre infrarouge (26) assurant l'absorption et/ou la réflexion du rayonnement thermique incident.

2. Unité d'affichage selon la revendication 1,
**caractérisée en ce**
**que** le filtre infrarouge (26) est déposé en phase vapeur sur une face arrière du verre de protection (20).

3. Unité d'affichage selon la revendication 1,
**caractérisée en ce**
**que** le verre de protection (20) est un verre de sécurité, constitué d'au moins trois couches (22, 24, 28), une couche de verre extérieure et une intérieure (22, 28), avec un film (24) disposé entre les deux, sachant que le filtre infrarouge (26) est déposé en phase vapeur sur n'importe quelle surface d'une partie constitutive du verre de sécurité orientée vers l'intérieur du verre de protection et que les couches sont stratifiées en une unité.

4. Unité d'affichage selon au moins l'une des revendications précédentes, **caractérisée en ce**
**que** le verre de protection (20) comprend en plus un filtre UV.

5. Unité d'affichage selon la revendication 4,
**caractérisée en ce**
**que** le filtre UV, en complément du filtre infrarouge (26), est appliqué sur n'importe quelle surface du verre de protection ou du verre de sécurité.

6. Unité d'affichage selon au moins l'une des revendications précédentes, **caractérisée en ce**
**que** le fluide réfrigérant ou calorifique est de l'air (36).

7. Unité d'affichage selon au moins l'une des revendications précédentes, **caractérisée en ce**
**que** le moyen de climatisation (32, 40) est raccordé à un capteur de température, ce dernier captant la température intérieure de préférence dans la partie supérieure de l'unité d'affichage (16) et commandant le moyen de climatisation (32, 40).

8. Unité d'affichage selon au moins l'une des revendications précédentes, **caractérisée en ce**
**que** le moyen de climatisation est réalisé sous la forme d'un ou de plusieurs ventilateurs (32, 40), par exemple des ventilateurs radiaux ou axiaux générant un flux d'air (36) dans le canal d'écoulement (18), sachant que les ventilateurs sont disposés dans le secteur des ouvertures marginales (34) dudit canal d'écoulement.

9. Unité d'affichage selon la revendication 8,
**caractérisée en ce**
**qu'**au moins un ventilateur (62), sous forme de ventilateur radial, est disposé sur un bord latéral de l'affichage à cristaux liquides.

10. Unité d'affichage selon au moins l'une des revendications précédentes, **caractérisée en ce**
**que** le boîtier de l'unité d'affichage présente des fentes d'aération (64, 60) au moins dans la zone des bords inférieurs et supérieurs.

11. Unité d'affichage selon au moins l'une des revendications précédentes, **caractérisée en ce**
**que** le moyen de climatisation est une installation de climatisation, laquelle est couplée au canal d'écoulement (18) afin de former un circuit de refroidissement ou de chauffage.

12. Unité d'affichage selon la revendication 11,
**caractérisée en ce**
**que** le circuit de refroidissement ou de chauffage comprend le canal d'écoulement (18) et de préférence un espace (44) s'étendant entre la face arrière de l'affichage à cristaux liquides et la paroi du boîtier.

13. Unité d'affichage selon au moins l'une des revendications 11 et 12, **caractérisée en ce**
**que** les unités électroniques (52) servant à la commande de l'unité d'affichage dans le circuit de refroidissement ou de chauffage, sont disposées de préférence sur une face arrière de l'affichage à cristaux liquides (16).

14. Unité d'affichage selon au moins l'une des revendications précédentes, **caractérisée en ce**
**que** l'affichage à cristaux liquides (16) comprend une matrice de type TFT.
